# EUROPÄISCHE PATENTSCHRIFT

(11) **EP 0 730 157 B1**
(45) Veröffentlichungstag und Bekanntmachung des Hinweises auf die Patenterteilung: **27.10.1999**
(21) Anmeldenummer: 96101825.6
(22) Anmeldetag: 07.02.1996
(51) Int. Cl.: G01P 15/00, G01P 15/13

(54) **Beschleunigungssensor**
Acceleration sensor
Capteur d'accélération

(30) Priorität: 23.02.1995 DE 19506401
(43) Veröffentlichungstag der Anmeldung: 04.09.1996
(73) Patentinhaber: SIEMENS AKTIENGESELLSCHAFT, 80333 München (DE)
(72) Erfinder: Biebl, Markus, D-86163 Augsburg (DE); Näher, Ulrich, Dr., D-80803 München (DE); Hierold, Christofer, Dr., D-81739 München (DE); Steger, Max, D-81737 München (DE)

(56) Entgegenhaltungen:
- EP-A- 0 230 198
- WO-A-92/03740
- WO-A-95/04284
- WO-A-96/06358

## Beschreibung

Die vorliegende Erfindung betrifft einen Beschleunigungssensor, vorzugsweise in Silizium, bei dem mikromechanische Herstellungsmethoden zur Anwendung gelangen können.

Äußerst kleine und damit kosteneffiziente mikromechanische Beschleunigungssensoren für Beschleunigungsmessungen im Bereich von Erdbeschleunigungen erfordern für die Auswertung des Meßergebnisses elektronische Schaltungen. Derartige Sensoren werden üblicherweise in Hybrid-Aufbau hergestellt, weil eine Realisierung in demselben Substrat eine praktisch additive Herstellungstechnologie erforderlich macht. Die elektronische Schaltung und der mikromechanische Sensor werden nacheinander hergestellt. Eine Verbesserung des Herstellungsverfahrens ergibt sich durch eine Integration des Verfahrens zur Herstellung des Sensors mit dem Herstellungsverfahren der elektronischen Komponenten, um so einen mit der Schaltung auf einem Chip integrierten Sensor zu bekommen. Ein äußerst kostengünstiges Verfahren zur Herstellung derartiger integrierter mikromechanischer Systeme ergibt sich aus der gleichzeitigen Verwendung der hergestellten Schichten, z. B. aus Silizium, sowohl für den elektronischen Teil als auch für den mikromechanischen Teil, d. h. das an Federn aufgehängte Masseteil. So kann beispielsweise die Abscheidung einer Schicht aus Polysilizium als Gate-Elektrode gleichzeitig als Schicht verwendet werden, aus der die mikromechanischen Bestandteile des Sensors, d. h. insbesondere das Masseteil, strukturiert werden. Ein hierbei auftretendes Problem liegt darin, daß die relativ dünne Schicht, wie sie für die Elektroden der elektronischen Bauelemente vorgesehen ist, ein sehr dünnes bewegliches mechanisches Teil liefert. Deshalb wird das für den Beschleunigungssensor vorgesehene Masseteil, aus dessen Trägheit die Größe der Beschleunigung zu bestimmen ist, keine ausreichende mechanische Stabilität aufweisen. Außerdem resultiert daraus, daß der Sensor die größte Empfindlichkeit in Richtung senkrecht zur Substratoberfläche aufweist. Eine Stabilisierung des Masseteiles in dieser Richtung durch entsprechend ausgebildete Federn, an denen das Masseteil aufgehängt ist, scheitert an dem begrenzten Auflösungsvermögen der bei der Herstellung verwendeten Lithographie. Die in der für die Strukturierung des Masseteiles vorgesehenen Schicht hergestellten federartigen Verstrebungen, an denen das Masseteil aufgehängt ist, können nicht so schmal hergestellt werden, daß die laterale Ausdehnung geringer ist als die vertikale. Das Masseteil kann daher leichter in Richtung senkrecht zum Substrat schwingen als in der Substratebene. Für viele Anwendungen, wie z. B. für Navigationssysteme auf einem Chip, ist es erforderlich, ein schwingfähiges System zu haben, bei dem eine Einwirkung von Trägheitskräften vorrangig zu einer Auslenkung in der Substratebene führt. Außerdem ist es erforderlich, die Auslenkung des Masseteiles registrieren zu können, was z. B. dadurch erfolgen kann, daß man eine Änderung von Kapazitäten der aus relativ zum Substrat oder relativ zum Masseteil fest angeordneten Elektroden gebildeten Kondensatoren feststellt.

In der WO 96/06 358, das einen Stand der Technik gemäß Artikel 54(3) EPÜ darstellt, ist ein mikromechanisch herstellbarer Kraftsensor beschrieben, bei dem ein Masseteil aus Silizium zur Detektion von Trägheitskräften verwendet wird. Das Masseteil ist so aufgehängt, daß eine Auslenkung gleichzeitig in vertikaler und lateraler Richtung bezüglich des Trägers erfolgt, wobei das Masseteil aber seine Ausrichtung relativ zu dem Träger beibehält. Für eine kapazitive Messung können an dem Masseteil und an dem Masseteil gegenüberliegenden Oberseiten des Trägers Elektroden mit elektrischem Anschluß vorhanden sein. Diese Elektroden sind einander gegenüberliegend angeordnet und können mehrteilig ausgebildet sein.

Aufgabe der vorliegenden Erfindung ist es, einen mikromechanischen Beschleunigungssensor aus Halbleitermaterial anzugeben, der auf einfache Weise mit elektronischen Komponenten auf demselben Chip integriert werden kann und der zur Messung einer Beschleunigung in der Ebene des Chips vorgesehen ist.

Diese Aufgabe wird mit dem Beschleunigungssensor mit den Merkmalen des Anspruches 1 gelöst. Weitere Ausgestaltungen ergeben sich aus den abhängigen Ansprüchen.

Bei dem erfindungsgemäßen Sensor befindet sich über einer Oberfläche eines Substrates beweglich angeordnet ein Masseteil, das für die Bestimmung auftretender Trägheitskräfte vorgesehen ist. Dieses Masseteil ist an federnden Verstrebungen aufgehängt, die auf dieser Oberfläche des Substrates befestigt sind. Wegen der Elastizität dieser federnden Verstrebungen wird das Masseteil nach einer erfolgten Auslenkung durch die Verstrebungen in eine Normalposition zurückgestellt, wenn keine Beschleunigung und daher keine Trägheitskraft mehr auftritt. Das Masseteil wird zusammen mit den Verstrebungen aus derselben Schicht aus Halbleitermaterial, z. B. Polysilizium oder kristallines Silizium, strukturiert. Die Dicke dieser Schicht wird so bemessen, daß weitere Anteile der Schicht nach der Strukturierung als Kontakt schicht oder Kontakt auf Bereichen verwendet werden können, die als Anschlüsse für auf oder in demselben Substrat integrierte elektronische Komponenten vorgesehen sind. Es kann so z. B. die Gate-Elektrode eines Feldeffekttransistors zusammen mit dem für den Sensor vorgesehenen Masseteil aus derselben Schicht strukturiert werden. Wegen der geringen Schichtdicke sind dann die Verstrebungen in Richtung senkrecht zur Substratoberfläche sehr elastisch, so daß die Bewegung des Masseteiles ohne die vorgesehenen Mittel nicht auf eine Ebene parallel zur Substratoberfläche beschränkt werden könnte.

Bei dem erfindungsgemäßen Sensor sind zur Messung der Beschleunigung und zur Stabilisierung der Auslenkung des Masseteiles in den Ebenen parallel zur Schichtebene des Masseteiles Paare von Elektroden vorgesehen. Diese Paare von Elektroden sind so angeordnet, daß je eine der Elektroden eines Paares an der Oberfläche des Substrates, die das Masseteil trägt, angebracht ist und die andere der beiden Elektroden auf der von dem Substrat abgewandten Seite des Masseteiles fest relativ zum Substrat angeordnet ist. Diese Paare von Elektroden sind also unbeweglich relativ zum Substrat, und das Masseteil kann sich zwischen den Elektroden bewegen. Das Masseteil selbst ist elektrisch leitend, z. B. geeignet dotiert, oder es sind in dem Masseteil Elektroden ausgebildet, z. B. durch eine lokale Dotierung oder durch aufgebrachte dünne Metallisierungen, die jeweils elektrisch leitend über die ebenfalls elektrisch leitend ausgebildeten Verstrebungen mit dem Substrat verbunden sind, so daß zwischen den fest am Substrat angebrachten Paaren von Elektroden und dem Masseteil Spannungen angelegt werden können. Die Spannung zwischen dem Masseteil und der Elektrode auf der Substratoberfläche und die Spannung zwischen dem Masseteil und der gegenüberliegenden Elektrode desselben Paares können unabhängig voneinander eingestellt und nachreguliert werden.

Es sind mindestens zwei Paare von Elektroden vorhanden. Diese Paare von Elektroden und ggf. die lokal begrenzten Elektroden auf dem Masseteil sind so zueinander angeordnet, daß Kondensatoren gebildet werden, deren Kapazitäten sich zumindest bei einem Paar von Elektroden ändern, wenn das Masseteil eine Auslenkung parallel zu der Oberfläche des Substrates erfährt. Das soll zumindest für eine mögliche Richtung parallel zur Substratoberfläche der Fall sein. Das andere dieser zwei mindestens vorhandenen Paare von Elektroden, die fest an dem Substrat angebracht sind, kann bezüglich der Elektroden des Masseteiles ebenfalls so angeordnet sein, daß bei Auslenkung des Masseteiles in einer bestimmten Richtung parallel zur Oberfläche des Substrates sich ebenfalls Änderungen der Kapazitäten der durch diese Elektroden gebildeten Kondensatoren ergeben, oder die Elektroden dieses weiteren Paares können so angeordnet sein, daß bei jeder beliebigen Auslenkung des Masseteiles parallel zur Oberfläche des Substrates keine Änderung dieser Kapazitäten auftritt.

Bei vorteilhaften Ausführungsformen des erfindungsgemäßen Sensors sind mehrere Elektrodenpaare vorgesehen. Das Masseteil ist vorzugsweise als Ganzes elektrisch leitend ausgebildet. Ein Teil der vorhandenen Elektrodenpaare kann dann dafür vorgesehen sein, durch eine Bestimmung der Änderung der betreffenden Kapazitäten bei einer Auslenkung des Masseteiles als Folge auftretender Trägheitskräfte die diese Trägheitskräfte verursachende Beschleunigung zu bestimmen. Vorzugsweise befinden sich diese Elektrodenpaare am Rand des Masseteiles, falls das Masseteil als Ganzes elektrisch leitend ausgebildet ist. Falls sich auf dem Masseteil seitlich begrenzte Elektroden befinden, können die betreffenden Elektrodenpaare auch im inneren Bereich des Masseteiles angeordnet sein. Weitere Elektrodenpaare, deren Kapazitäten gegenüber dem Masseteil sich bei beliebigen Auslenkungen des Masseteils in der Ebene der Substratoberfläche nicht ändern, sind dafür vorgesehen, bei Anlegen dafür geeigneter Spannungen in Richtung senkrecht zur Substratoberfläche auftretende Trägheitskräfte elektrostatisch zu kompensieren, so daß das Masseteil immer in derselben Ebene, d. h. im selben Abstand zur Substratoberfläche gehalten wird. Auf diese Weise läßt sich die Bewegung des Masseteiles in eine Ebene parallel zur Substratoberfläche einschränken. Eine geringere mechanische Stabilität des Masseteiles gegenüber dem Masseteil herkömmlicher mikromechanischer Beschleunigungssensoren aufgrund der geringen Dicke der für die Herstellung des Masseteiles verwendeten Schicht kann mit diesen Elektroden mittels elektrostatischer Kräfte zumindest teilweise kompensiert werden.

Der erfindungsgemäße Beschleunigungssensor bietet daher die Möglichkeit, das für die Bestimmung von Trägheitskräften erforderliche bewegliche Masseteil aus einer sehr dünnen Schicht herzustellen, die gleichzeitig für die Kontaktierung elektronischer Komponenten vorgesehen ist, und dabei trotzdem die Empfindlichkeit des Sensors im wesentlichen auf die Ebene der Ausdehnung des Masseteiles zu beschränken. Eine wesentliche Idee dieser Erfindung ist es, die Federwirkung der Verstrebungen, die das Masseteil über dem Substrat halten, durch elektrostatische Kräfte zu unterstützen. Falls durch den Herstellungsprozeß bedingt die Breite der Verstrebungen nicht geringer als die Höhe, die der Schichtdicke des verwendeten Materiales entspricht, hergestellt werden kann, ist die Aufhängung in Richtung senkrecht zum Substrat elastischer, d. h. weicher, als parallel zur Substratoberfläche. Eine Auslenkung des Masseteiles senkrecht zur Substratoberfläche ist aber nicht erwünscht. Es werden daher Paare von Elektroden so angeordnet, daß eine Auslenkung des Masseteiles senkrecht zum Substrat bei Anlegen geeigneter elektrischer Spannungen zwischen dem Masseteil und der unteren bzw. der oberen Gegenelektrode verhindert werden kann. Eine einer auslenkenden Kraft entgegengesetzte elektrostatische Kraft, die diese auslenkende Kraft kompensiert, hält das Masseteil also immer in derselben Ebene, d. h. im selben Abstand zum Substrat. Die Verwendung mehrerer als Gegenelektroden verwendeter Paare von Elektroden an verschiedenen Stellen des Masseteiles hat den weiteren Vorteil, daß das Masseteil auch gegenüber Verkippungen relativ zum Substrat stabilisiert werden kann.

Die zur Kompensation der senkrecht zum Substrat wirkenden Kräfte notwendigen elektrischen Spannungen zwischen dem Masseteil und den relativ zum Substrat festen Gegenelektroden der Elektrodenpaare ist ein direktes Maß für die senkrecht zum Substrat wirkenden Beschleunigungen. Daher kann gleichzeitig mit der Kompensation einer senkrecht zum Substrat wirkenden Trägheitskraft auch die Größe der diese Trägheitskraft verursachenden Beschleunigung bestimmt werden, was den Einsatz des erfindungsgemäßen Sensors auch für eine dreidimensionale Erfassung von Beschleunigungen möglich macht.

Über eine für den Betrieb des Sensors vorgesehene elektronische Schaltung können zwischen den fest angebrachten Elektroden und dem Masseteil Spannungen angelegt und nachgeregelt werden, so daß das Masseteil immer in der Mitte zwischen den Elektrodenpaaren gehalten wird, wobei die Empfindlichkeit des Sensors für Beschleunigungen in der Ebene der Substratoberfläche erhalten bleibt. Die Oberfläche des Substrates braucht nur so eben zu sein, daß die Bewegung des Masseteiles möglich ist. Als Ebene der Oberfläche des Substrates wird hier wie in den Ansprüchen die dem Masseteil zugewandte und zumindest näherungsweise ebene Oberseite des Substrates oder eine Ebene, die der Schichtebene einer Schichtstruktur an dieser Oberseite entspricht, verstanden. Die unteren Elektroden der Elektrodenpaare sind jeweils an oder in dieser Oberfläche des Substrates ausgebildet. Die diesen Elektroden gegenüberliegend angeordneten Elektroden auf der von dem Substrat abgewandten Seite des Masseteiles können z. B. in einer dieses Masseteil überdeckenden Schicht ausgebildet sein.

Bei der Herstellung des Sensors werden z. B. auf die Oberseite des Substrates nacheinander eine Hilfsschicht, die für die Strukturierung des Masseteiles vorgesehene Schicht, eine weitere Hilfsschicht und die für diese oberen Elektroden vorgesehene Schicht übereinander aufgebracht und strukturiert. Die Hilfsschichten werden anschließend entfernt, so daß das Masseteil im gleichen Abstand zu den unteren und zu den oberen Elektroden frei beweglich ist. Dabei können die bei der Herstellung mikromechanischer Bauelemente üblichen Techniken eingesetzt werden.

Um die Bewegung des Masseteiles in der Ebene der Substratoberfläche zu messen, sind vorzugsweise solche Paare von Elektroden vorgesehen, deren Kapazitäten zum Masseteil sich bei einer entsprechenden Auslenkung des Masseteiles ändern. Die Änderung dieser Kapazitäten erfolgt aufgrund der geometrischen Anordnung der Elektroden dadurch, daß die Flächen der durch die jeweiligen Elektroden mit dem Masseteil bzw. mit den im Masseteil angeordneten Elektroden gebildeten Kondensatoren sich ändern. Diese Paare von Elektroden müssen daher in der Richtung, in der die Auslenkung des Masseteiles erfaßt werden soll, begrenzt sein. Mehrere Paare solcher Elektroden können vorgesehen sein, um die Auslenkung des Masseteiles in verschiedenen Richtungen in der Ebene der Substratoberfläche feststellen zu können. Es ist dabei auch möglich, ähnlich wie bei der elektrostatischen Kompensation von senkrecht zur Substratoberfläche auftretenden Trägheitskräften, in dieser Substratoberfläche wirkende Trägheitskräfte elektrostatisch zu kompensieren. Auf diese Weise kann eine in der Ebene der Substratoberfläche auftretende Beschleunigung gemessen werden, ohne daß das Masseteil ausgelenkt wird.

Die für die betreffende elektrostatische Kompensation vorgesehenen Elektrodenpaare müssen dann allerdings so ausgerichtet sein, daß eine Auslenkung des Masseteiles in dieser Ebene eine Änderung der Kapazitäten der von den Elektroden jeweils zusammen mit dem Masseteil gebildeten Kondensatoren nach sich ziehen würde. Die für diese elektrostatische Kompensation der auftretenden Trägheitskräfte notwendigen elektrischen Spannungen oder Spannungsänderungen sind dabei ein Maß für die auftretenden Beschleunigungen.

Bei Ausführungsformen des erfindungsgemäßen Sensors kann vorgesehen sein, daß dieselben Elektrodenpaare, die durch elektrostatische Kräfte eine Auslenkung des Masseteiles senkrecht zum Substrat verhindern, auch für die Messung der Beschleunigung in der Ebene der Substratoberfläche verwendet werden. In diesem Fall vereinfacht sich die Anordnung der verschiedenen Elektroden auf Kosten einer dann erforderlichen aufwendigeren Schaltungstechnik, die nun ein Elektrodenpaar gleichzeitig zur Messung der Beschleunigung und zur Kompensation vertikaler und lateraler Auslenkungen des Masseteiles einsetzen muß.

Im Fall einer Auslenkung des Masseteils in Richtung senkrecht zur Substratoberfläche als Folge einer Beschleunigung in dieser Richtung ändern sich die Kapazitäten der Kondensatoren, die gebildet werden von den beiden Elektroden eines Elektrodenpaares und dem Masseteil bzw. einer im Masseteil angeordneten dritten Elektrode. Die Kapazitäten können z. B. dadurch bestimmt werden, daß man die durch je zwei Elektroden gebildeten Kondensatoren als Element eines elektrischen Schwingkreises schaltet und aus einer auftretenden Resonanzfrequenz die Kapazität bestimmt. Auf diese Weise kann auch eine Änderung der Kapazität festgestellt werden. Wenn sich die Kapazitäten zwischen der Elektrode des Masseteiles und der unteren, an der Oberfläche des Substrates ausgebildeten Elektrode und zwischen der Elektrode des Masseteiles und der zweiten Elektrode des betreffenden Elektrodenpaares als Folge einer Auslenkung des Masseteiles in Richtung senkrecht zum Substrat ändern, kann durch Anlegen entsprechender unterschiedlicher elektrischer Spannungen zwischen diesen Elektroden eine solche elektrostatische Kraft hervorgerufen werden, daß die Auslenkung des Masseteiles rückgängig gemacht wird.

Zur Bestimmung einer lateralen Auslenkung des Masseteiles, d. h. einerAuslenkung in der Schichtebene des Masseteiles bzw. in der Ebene der Substratoberfläche, werden die Kapazitäten zwischen der (beweglichen) Elektrode des Masseteiles (bzw. dem ganzen Masseteil) und der unteren bzw. der oberen Elektrode eines Elektrodenpaares, das fest mit dem Substrat verbunden ist, bestimmt und z. B. mit den Kapazitäten eines Elektrodenpaares am gegenüberliegenden Rand des Masseteiles verglichen. Eine auftretende laterale Auslenkung kann dann durch Anlegen entsprechender Spannungen zwischen den Elektroden der Elektrodenpaare und dem Masseteil rückgängig gemacht werden. Bei vertikalen Auslenkungen (in Richtung senkrecht zum Substrat) werden also die an den unteren und oberen Elektroden der Elektrodenpaare gegenüber dem Masseteil angelegten Spannungen zur Kompensation der Auslenkung gegensinnig verändert, bei lateralen Auslenkungen werden die Spannungen gleichsinnig verändert, wobei allerdings eine elektrostatische Kompensation der das Masseteil auslenkenden Trägheitskraft nur möglich ist, wenn ein Elektrodenpaar so angeordnet ist, daß eine zu kompensierende Auslenkung des Masseteils eine Verminderung der Kapazitäten der durch diese Elektroden mit dem Masseteil gebildeten Kondensatoren hervorrufen würde. Mit dem erfindungsgemäßen Sensor ist es also möglich, aufgrund einer einzigen Anordnung von Elektrodenpaaren unter Verwendung geeignter elektronischer Schaltungen Beschleunigungen in drei zueinander senkrechten Richtungen zu erfassen und dabei ggf. eine Auslenkung des Masseteiles zu unterbinden.

Die Herstellung des erfindungsgemäßen Sensors kann mit Prozeßschritten erfolgen, die gleichzeitig für die Herstellung des elektronischen Teiles und für die Herstellung des mechanischen Teiles des Chips vorgenommen werden. Dabei kann die mikromechanische Struktur des Sensors auch durch von dem elektronischen Teil separate Herstellungsverfahren oder durch einen allein für diese mechanische Komponente vorgesehen Prozeß hergestellt werden. Im Falle einer Integration des Sensors mit einem Bipolartransistor kann z. B. die Anzahl der für den Sensor vorgesehenen unteren Elektroden im Substat zusammen mit dem für den Kollektor vorgesehenen dotierten Bereich (buried layer), das Masseteil in der für den Basisanschluß vorgesehenen Polysiliziumschicht und die für die oberen, fest mit dem Substrat verbundenen Elektroden des Sensors vorgesehene Schicht zusammen mit der Abscheidung des Emitter-Polysiliziums als Polysiliziumschicht hergestellt werden. In diesem Fall wird das Masseteil als vergleichsweise dünne Schicht hergestellt, weil das Basis-Polysilizium ebenfalls nur als relativ dünne Schicht abgeschieden wird. Die Anwendung der erfindungsgemäß vorgesehenen Elektrodenpaare zur vertikalen Stabilisierung des Masseteiles wird daher bei dieser Integration besonders vorteilhaft angewendet werden.

Es folgt eine Beschreibung verschiedener Ausführungsbeispiele des erfindungsgemäßen Beschleunigungssensors anhand der Figuren 1 bis 4.
- Figur 1: zeigt einen erfindungsgemäßen Sensor im Querschnitt.
- Figur 2: zeigt einen Ausschnitt des in Figur 1 dargestellten Sensors in der in Figur 1 eingezeichneten Schnittaufsicht.
- Figuren 3 und 4: zeigen Schemazeichnungen für Ausführungsformen des Sensors mit typischen Anordnungen der Elektroden in Aufsicht.

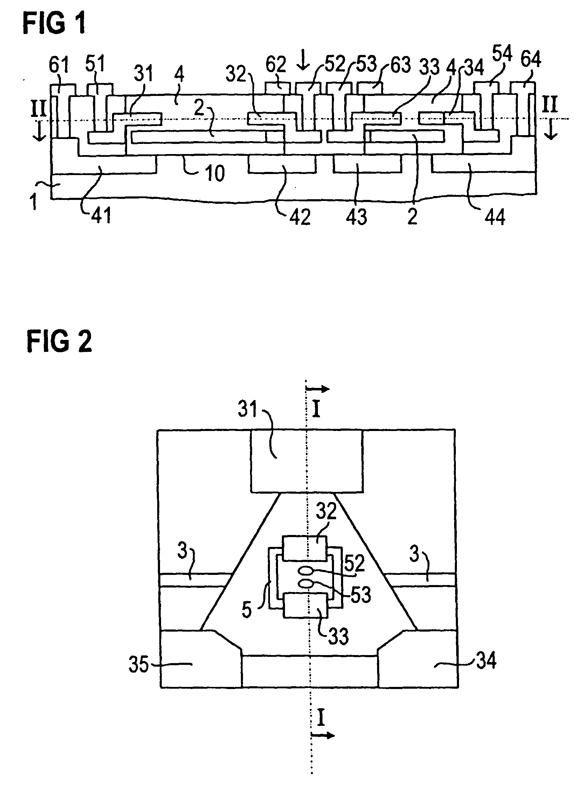

Bei dem in Figur 1 dargestellten Sensor ist über der Oberfläche 10 des Substrates 1 das bewegliche Masseteil 2 angeordnet. Das Masseteil 2 besitzt bei dieser Ausführungsform eine fensterartige Aussparung in der Mitte, in der weitere für den Sensor vorgesehene Bestandteile fest auf der Oberfläche 10 des Substrates 1 angeordnet sind. In dem Substrat 1, das eine Halbleiterscheibe oder eine Halbleiterschichtstruktur sein kann, sind an der Oberfläche 10, die als Beispiel idealisierend eben eingezeichnet ist, Elektroden 41, 42, 43, 44 in diesem Beispiel als dotierte Bereiche ausgebildet. Diese Elektroden sind mit entsprechenden elektrischen Anschlüssen 61, 62, 63, 64 versehen. Diese elektrischen Anschlüsse können wie in dem Beispiel gezeigt an eine planarisierte Oberseite des Bauelementes geführt sein oder aber z. B. an der Oberfläche 10 zu elektronischen Komponenten, die auf dem Substrat 1 integriert sind, geführt sein. Als Gegenelektrode zur Ausbildung der Elektrodenpaare sind zu jeder dieser im Substrat angeordneten Elektroden obere Elektroden 31, 32, 33, 34 vorgesehen, die über das Masseteil 2 auf der von dem Substrat abgewandten Seite hinausragen. Das Masseteil 2 ist also zwischen Paaren einander zugeordneter Elektroden 31, 41; 32, 42; 33, 43; 34, 44 beweglich angeordnet. Die oberen Elektroden sind ebenfalls mit elektrischen Anschlüssen 51, 52, 53, 54 versehen, die in diesem Beispiel ebenfalls an eine planarisierte Oberseite des Bauelementes geführt sind. Das Masseteil 2 ist hier in einer Aussparung dieser Planarisierung angeordnet. Die oberen Elektroden 31, 32, 33, 34 sind jeweils nur in den Bereichen vorhanden, in denen die unteren Elektroden 41, 42, 43, 44 vorhanden sind. Es ist aber auch möglich, daß sich oberhalb des Masseteiles 2 eine Schicht befindet, in der die oberen Elektroden als begrenzte dotierte Bereiche ausgebildet sind. In dem gezeichneten Beispiel befinden sich die elektrischen Verbindungen zwischen den dargestellten mittleren unteren Elektroden 42, 43 und den zugehörigen oberen Anschlußkontakten 62, 63 aus der Zeichenebene nach hinten hinter die rückseitige Seitenwand 4 der für das Masseteil 2 vorgesehenen Aussparung versetzt und werden von der dort vorhandenen Passivierungsschicht verdeckt. Die mittleren oberen Elektroden 32, 33 sind im Innern der fensterartigen Aussparung des Masseteiles 2 auf dem Substrat befestigt.

Figur 2 zeigt einen auf die für das Masseteil vorgesehene Aussparung begrenzten Ausschnitt aus der in Figur 1 eingezeichneten Schnittaufsicht. In Figur 2 ist zu erkennen, daß bei diesem Ausführungsbeispiel das Masseteil als Dreieck ausgeführt ist. Innerhalb der fensterartigen Aussparung 5 dieses Masseteiles sind die inneren oberen Elektroden 32, 33 auf dem Substrat befestigt und mit den elektrischen Anschlüssen 52, 53 versehen. Die übrigen oberen Elektroden 31, 34, 35 überragen jeweils die Ecken des Masseteiles. Das Masseteil ist an Verstrebungen 3 auf dem Substrat befestigt. Die ungefähre Lage dieser Verstrebungen 3 ist in Figur 1 durch den über der Figur eingezeichneten Pfeil bezeichnet. Der Sensor dieses Ausführungsbeispiels ist vorrangig zur Bestimmung von Beschleunigungen in der Richtung senkrecht zur Ausrichtung der Verstrebungen 3 vorgesehen. Die inneren Elektrodenpaare, von denen hier jeweils die obere Elektrode 32, 33 dargestellt ist, werden zur elektrostatischen Kompensation einer Auslenkung des Masseteils in dieser Richtung verwendet, wobei gleichzeitig die Größe der wirkenden Trägheitskraft und daraus die Größe der auftretenden Beschleunigung bestimmt werden. Die übrigen Elektrodenpaare, von denen in Figur 2 jeweils die oberen Elektroden 31, 34, 35 eingezeichnet sind, dienen bei diesem Ausführungsbeispiel zur Unterdrückung vertikaler (d. h. senkrecht zur Zeichenebene erfolgender) Auslenkungen des Masseteils und zur mechanischen Stabilisierung des Masseteiles. Bei der gezeichneten geometrischen Anordnung der Elektrodenpaare werden aber bei jeder Auslenkung des Masseteiles in der Zeichenebene Änderungen der Kapazitäten zwischen der oberen Elektrode und dem Masseteil bzw. der unteren Elektrode und dem Masseteil bei zumindest einem der an den Ecken des Masseteils angeordneten Elektrodenpaare auftreten, so daß auch diese Elektrodenpaare zur Messung der Beschleunigung eingesetzt werden könnten. Das Masseteil kann als Ganzes elektrisch leitend ausgebildet sein oder jeweils nur in den Bereichen der bezüglich des Substrates senkrechten Projektionen der vorhandenen Elektrodenpaare. Der elektrische Anschluß des als Ganzes leitfähigen Masseteiles oder der in dem Masseteil ausgebildeten Elektroden erfolgt über die ebenfalls elektrisch leitend ausgebildeten Verstrebungen 3, die das Masseteil tragen und von denen auch bei diesem Ausführungsbeispiel außer den eingezeichneten noch weitere vorhanden sein können.

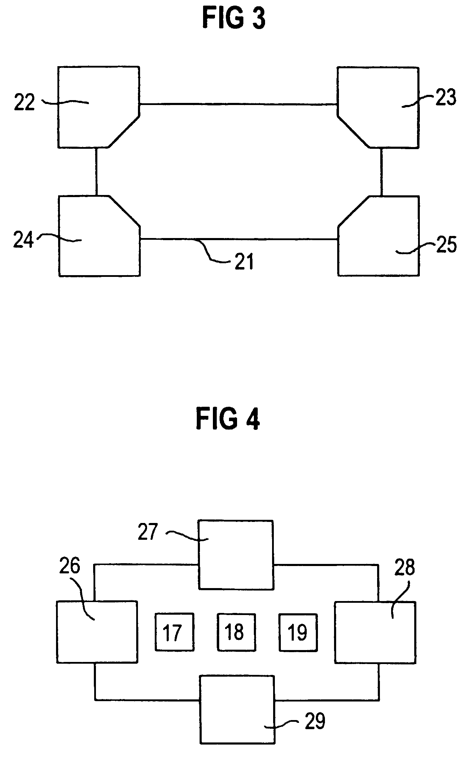

In Figur 3 ist als Prinzipskizze ein diesmal rechteckiges Masseteil 21 dargestellt, an dessen Ecken jeweils Elektrodenpaare 22, 23, 24, 25 angeordnet sind. Diese Elektrodenpaare können jeweils gleichzeitig der Kompensation vertikaler Auslenkung des Masseteiles 21 dienen und für die Bestimmung einer Auslenkung oder Trägheitskraft in der Zeichenebene verwendet werden.

In Figur 4 sind zu dem rechteckigen Masseteil 21, das hier z. B. vollständig elektrisch leitend dotiert als eine große Elektrode ausgebildet sein kann, vier Elektrodenpaare 26, 27, 28, 29 eingezeichnet, deren bezüglich der Substratoberfläche senkrechte Projektionen nur teilweise von dem Masseteil geschnitten werden, und weitere drei Elektrodenpaare 17, 18, 19, deren bezüglich der Substratoberfläche senkrechte Projektionen vollständig von dem Masseteil 21 geschnitten werden. Bei einer Auslenkung des Masseteiles 21 in der Zeichenebene werden daher die Flächen der von diesen Elektrodenpaaren mit dem Masseteil gebildeten Kondensatoren im Falle der inneren Elektrodenpaare 17, 18, 19 konstant bleiben, während im Fall der äußeren Elektrodenpaare 26, 27, 28, 29 die Kondensatorflächen bei zumindest einem dieser Paare variieren werden. Die inneren Elektrodenpaare 17, 18, 19 werden hier ausschließlich zur elektrostatischen Kompensation einer möglichen Auslenkung des Masseteils senkrecht zur Substratoberfläche, d. h. hier senkrecht zur Zeichenebene, verwendet. Die den Bereich des Masseteiles partiell überlappenden Elektrodenpaare 26, 27, 28, 29 können zur Bestimmung einer in der Zeichenebene erfolgenden Beschleunigung des Masseteiles verwendet werden, wobei gleichzeitig eine Auslenkung des Masseteiles elektrostatisch verhindert werden kann. Diese Elektrodenpaare können aber zusätzlich auch zur Verhinderung einer vertikalen Auslenkung (senkrecht zur Zeichenebene) als Unterstützung der inneren Elektrodenpaare 17, 18, 19 eingesetzt werden.

Die für eine elektrostatische Kompensation der Auslenkung des Masseteiles in der Ebene der Substratoberfläche vorgesehenen Elektrodenpaare brauchen nicht an einem äußeren Rand des Masseteiles angeordnet zu sein, sondern können wie in Figur 2 dargestellt am Rand einer irgendwie gearteten Aussparung des Masseteils, die auch zur Seite hin offen sein kann, angeordnet sein. Elektrodenpaare, die wie die inneren Elektrodenpaare 17, 18, 19 des Ausführungsbeispieles der Figur 4 vollständig in dem von dem Masseteil 21 eingenommenen Bereich angeordnet sind, und zwar bei jeder Auslenkung des Masseteiles, können auch zur Bestimmung der Größe der Beschleunigung verwendet werden, falls das Masseteil 21 nicht als Ganzes als Elektrode ausgebildet ist, sondern in dem Masseteil lateral begrenzte Elektroden vorhanden sind. Diese in dem Masseteil ausgebildeten Elektroden können in dem Ausführungsbeispiel der Figur 4 z. B. auf den Bereich der bezüglich der Substratoberfläche senkrechten Projektionen der inneren Elektrodenpaare 17, 18, 19 begrenzt angeordnet sein. Lokal begrenzte Elektroden können in den Schichten z. B. durch eine lokal begrenzte Dotierung des für die Schichten verwendeten Halbleitermateriales (z. B. Silizium) hergestellt werden. Schließlich sei zur Klarstellung angeführt, daß bei allen Ausführungen des erfindungsgemäßen Sensors die jeweils dem Masseteil zugewandten Flächen der Elektroden eines fest am Substrat angebrachten Elektrodenpaares nicht gleich groß zu sein brauchen.

## Patentansprüche

1. Beschleunigungssensor auf einem Substrat (1) aus Halbleitermaterial, bei dem
- ein Masseteil (2) über einer Oberfläche (10) dieses Substrates (1) und relativ zu diesem Substrat beweglich angebracht und mit Verstrebungen (3) auf diesem Substrat befestigt ist,
- das Masseteil (2) zusammen mit den Verstrebungen (3) aus derselben Schicht aus Silizium strukturiert ist,
- mindestens zwei Paare von relativ zu diesem Substrat (1) fest angebrachten Elektroden (31, 41; 32, 42; 33, 43; 34, 44) vorhanden sind,
- diese Paare von Elektroden (31, 41; 32, 42; 33, 43; 34, 44) so angeordnet sind, daß je eine der Elektroden (41, 42, 43, 44) eines Paares an der Oberfläche des Substrates (1), die das Masseteil (2) trägt, angebracht ist und die andere der beiden Elektroden (31, 32, 33, 34) auf der von dem Substrat (1) abgewandten Seite des Masseteiles (2) fest relativ zum Substrat (1) angeordnet ist,
- das Masseteil (2) elektrisch leitend oder zumindest im Bereich der zu dieser Oberfläche des Substrates (1) senkrechten Projektionen dieser Elektroden mit einer oder mehreren Elektroden und einem elektrischen Anschluß versehen ist und
- mindestens eines dieser Paare von Elektroden (31, 41; 32, 42; 33, 43; 34, 44) so angeordnet ist, daß bei jeder möglichen Position des Masseteils (2) die zu der Oberfläche des Substrates (1) senkrechten Projektionen der beiden Elektroden dieses Paares nicht verschwindende Schnitte mit einem als Elektrode fungierenden Anteil des Masseteils (2) aufweisen,
- die Verstrebungen (3) so ausgebildet sind, daß das Masseteil (2) in der Ebene der Substratoberfläche ausgelenkt werden kann,
- in mindestens einer Richtung parallel zu dieser Oberfläche bei jeder Auslenkung des Masseteils (2) die Größen der Schnitte der zu der Oberfläche des Substrates (1) senkrechten Projektionen der beiden Elektroden des mindestens einen Paares mit einem als Elektrode fungierenden Anteil des Masseteils variieren,
- die Dicke der Schicht des Masseteils (2) der Dicke einer Kontaktschicht oder eines Kontaktes aus Silizium entspricht, die bzw. der als Anschluß für auf oder in dem Substrat (1) integrierte elektronische Komponenten vorgesehen ist, und
- die an der Oberfläche des Substrates angebrachten Elektroden (41, 42, 43, 44) als dotierte Bereiche ausgebildet sind.

2. Beschleunigungssensor nach Anspruch 1, bei dem
auf dem Substrat (1) ein Feldeffekttransistor mit einer Gate-Elektrode integriert ist und
diese Gate-Elektrode aus derselben Schicht wie das Masseteil (2) strukturiert ist.

3. Beschleunigungssensor nach Anspruch 1 oder 2, bei dem
mindestens eines der Paare von Elektroden (17, 18, 19) so angeordnet ist, daß die zu der Oberfläche des Substrates senkrechten Projektionen der Elektroden (17, 18, 19) dieses Paares nicht verschwindende Schnitte mit dem als Elektrode fungierenden Anteil des Masseteils (2) aufweisen und bei jeder möglichen Auslenkung des Masseteils (2) parallel zu dieser Oberfläche die Größen dieser Schnitte konstant bleiben.

4. Beschleunigungssensor nach einem der Ansprüche 1 bis 3, bei dem
das Masseteil (2) eine fensterartige Aussparung (5) aufweist und die zu der Oberfläche des Substrates (1) senkrechten Projektionen der Elektroden mindestens eines der Paare von Elektroden (32, 42; 33, 43) nicht verschwindende Schnitte mit dieser Aussparung (5) aufweisen.

5. Beschleunigungssensor nach einem der Ansprüche 1 bis 4, bei dem
die Verstrebungen (3) in der Richtung senkrecht zur Oberfläche des Substrates (1) ihre geringste Abmessung haben.

6. Beschleunigungssensor nach einem der Ansprüche 1 bis 5, bei dem
die Elektroden mit einer elektronischen Schaltung verbunden sind, über die zwischen dem Masseteil (2) und den Elektroden eines Paares von Elektroden veränderbare elektrische Spannungen angelegt und so geregelt werden können, daß eine in Richtung senkrecht zur Oberfläche des Substrates (1) auf das Masseteil (2) wirkende Trägheitskraft durch diese Spannungen elektrostatisch kompensiert wird.

7. Beschleunigungssensor nach Anspruch 6, bei dem
diese Schaltung so beschaffen ist, daß über sie zwischen dem Masseteil (2) und den Elektroden (31, 41; 32, 42; 33, 43; 34, 44) eines Paares von Elektroden, das so angeordnet ist, daß bei jeder möglichen Position des Masseteils (2) die zu der Oberfläche des Substrates (1) senkrechten Projektionen der beiden Elektroden dieses Paares nicht verschwindende Schnitte mit dem als Elektrode fungierenden Anteil des Masseteils (2) aufweisen und in mindestens einer Richtung parallel zu dieser Oberfläche bei jeder Auslenkung des Masseteils (2) die Größen dieser Schnitte variieren, elektrische Spannungen derart angelegt werden können, daß damit eine Änderung der Kapazitäten der von den Elektroden dieses Paares jeweils mit dem Masseteil (2) gebildeten Kondensatoren als Folge einer Auslenkung des Masseteils (2) in dieser Richtung und daraus die Größe dieser Auslenkung bestimmt werden kann.

8. Beschleunigungssensor nach Anspruch 6, bei dem
diese Schaltung so beschaffen ist, daß über sie zwischen dem Masseteil (2) und den Elektroden (32, 42; 33, 43) zweier Paare von Elektroden, die so angeordnet sind, daß bei jeder möglichen Position des Masseteils (2) die zu der Oberfläche des Substrates senkrechten Projektionen der beiden Elektroden dieser Paare nicht verschwindende Schnitte mit dem als Elektrode fungierenden Anteil des Masseteils (2) aufweisen und in mindestens einer Richtung parallel zu dieser Oberfläche bei jeder Auslenkung des Masseteils (2) die Größen dieser Schnitte bei zu verschiedenen Paaren gehörenden Elektroden gegensinnig variieren, elektrische Spannungen angelegt und so geregelt werden können, daß eine in dieser Richtung auf das Masseteil (2) wirkende Trägheitskraft durch diese Spannungen elektrostatisch kompensiert wird und daß eine in Richtung senkrecht zur Oberfläche des Substrates (1) wirkende Trägheitskraft ebenfalls durch diese Spannungen elektrostatisch kompensiert wird.

## Claims

1. Acceleration sensor on a substrate (1) made from semiconductor material, in which
- an inertial part (2) is fitted over a surface (10) of this substrate (1) in a fashion moveable relative to this substrate and is fastened on this substrate with the aid of struts (3)
- the inertial part (2) is structured together with the struts (3) from the same layer made from silicon,
- at least two pairs of electrodes (31, 41; 32, 42; 33, 43; 34, 44) fitted in a fixed fashion relative to this substrate (1) are present,
- these pairs of electrodes (31, 41; 32, 42; 33, 43; 34, 44) are arranged such that one each of the electrodes (41, 42, 43, 44) of a pair is fitted on the surface of the substrate (1) which supports the inertial part (2), and the other of the two electrodes (31, 32, 33, 34) is arranged in a fixed fashion relative to the substrate (1) on the side of the inertial part (2) averted from the substrate (1),
- the inertial part (2) is provided in an electrically conducting fashion, or at least in the region of the projections of these electrodes perpendicular to this surface of the substrate (1), with one or more electrodes and an electric connection, and
- at least one of these pairs of electrodes (31, 41; 34, 42; 33, 43; 34, 44) is arranged such that for any possible position of the inertial part (2) the projections, perpendicular to the surface of the substrate (1), of the two electrodes of this pair have non-vanishing intersections with a portion of the inertial part (2) functioning as electrode,
- the struts (3) are constructed such that the inertial part (2) can be deflected in the plane of the substrate surface,
- in at least one direction parallel to this surface the sizes of the intersections of the projections, perpendicular to the surface of the substrate (1), of the two electrodes of the at least one pair with a portion of the inertial part functioning as electrode vary with each deflection of the inertial part (2),
- the thickness of the layer of the inertial part (2) corresponds to the thickness of a contact layer or of a contact made from silicon, which contact layer or contact is provided as a connection for electronic components integrated on or in the substrate (1), and
- the electrodes (41, 42, 43, 44) fitted on the surface of the substrate are constructed as doped regions.

2. Acceleration sensor according to Claim 1, in which a field-effect transistor with a gate electrode is integrated on the substrate (1), and this gate electrode is structured from the same layer as the inertial part (2).

3. Acceleration sensor according to Claim 1 or 2, in which at least one of the pairs of electrodes (17, 18, 19) is arranged such that the projections, perpendicular to the surface of the substrate, of the electrodes (17, 18, 19) of this pair have non-vanishing intersections with the portion of the inertial part (2) functioning as electrode, and the sizes of these intersections remain constant for any possible deflection of the inertial part (2) parallel to this surface.

4. Acceleration sensor according to one of Claims 1 to 3, in which the inertial part (2) has a window-like cutout (5), and the projections, perpendicular to the surface of the substrate (1), of the electrodes of at least one of the pairs of electrodes (32, 43; 33, 43) have non-vanishing intersections with this cutout (5).

5. Acceleration sensor according to one of Claims 1 to 4, in which the struts (3) have their smallest dimension in the direction perpendicular to the surface of the substrate (1).

6. Acceleration sensor according to one of Claims 1 to 5, in which the electrodes are connected to an electronic circuit via which variable electric voltages are applied between the inertial part (2) and the electrodes of a pair of electrodes and can be controlled such that an inertial force acting on the inertial part (2) in the direction perpendicular to the surface of the substrate (1) is compensated electrostatically by these voltages.

7. Acceleration sensor according to Claim 6, in which this circuit is designed such that it can be used to apply electric voltages between the inertial part (2) and the electrodes (31, 41; 32, 42; 33, 43; 34, 44) of one pair of electrodes, which is arranged such that for every possible position of the inertial part (2) the projections, perpendicular to the surface of the substrate (1), of the two electrodes of this pair have non-vanishing intersections with the portion of the inertial part (2) functioning as electrode, and the sizes of these intersections vary in at least one direction parallel to this surface for each deflection of the inertial part (2), these voltages being applied in such a way that it is thereby possible to determine a change in the capacitances of the capacitors, formed by the electrodes of this pair with the inertial part (2) in each case, as a consequence of a deflection of the inertial part (2) in this direction, and the size of this deflection can be determined therefrom.

8. Acceleration sensor according to Claim 6, in which this circuit is designed such that it can be used to apply electric voltages between the inertial part (2) and the electrodes (32, 42; 33, 43) of two pairs of electrodes, which are arranged such that for every possible position of the inertial part (2) the projections, perpendicular to the surface of the substrate, of the two electrodes of these pairs have non-vanishing intersections with the portion of the inertial part (2) functioning as electrode, and, for electrodes belonging to different pairs, the sizes of these intersections vary inversely, in at least one direction parallel to this surface for each deflection at the inertial part (2), and these voltages can be controlled such that an inertial force acting in this direction on the inertial part (2) is compensated electrostatically by these voltages and that an inertial force acting in the direction perpendicular to the surface of the substrate (1) is likewise electrostatically compensated by these voltages.

## Revendications

1. Capteur d'accélération sur un substrat (1) en matériau semi-conducteur, pour lequel
- une masse (2) est disposée au-dessus d'une surface (10) de ce substrat (1), d'une façon mobile par rapport à ce substrat, et est fixée à ce substrat par des entretoises (3),
- la masse (2) est structurée, en commun avec les entretoises (3), à partir de la même couche de silicium,
- il existe au moins deux paires d'électrodes (31, 41; 32, 42; 33, 43; 34, 44) fixées immobiles par rapport à ce substrat (1),
- ces paires d'électrodes (31, 41; 32, 42; 33, 43; 34, 44) sont disposées de telle sorte que l'une des électrodes (41, 42, 43, 44) d'une paire est fixée à la surface du substrat (1), qui porte la masse (2) et que l'autre (31, 32, 33, 34) des deux électrodes est placée, d'une façon immobile par rapport au substrat (1), sur le côté de la masse (2) opposé au substrat (1),
- la masse (2) est conductrice d'électricité ou est pourvue, au moins dans la zone des projections perpendiculaires de ces électrodes par rapport à cette surface du substrat (1), d'une ou plusieurs électrodes et d'un raccordement électrique,
- au moins une de ces paires d'électrodes (31, 41; 32, 42; 33, 43; 34, 44) est disposée de telle sorte que, pour chaque position possible de la masse (2), les projections des deux électrodes de cette paire, perpendiculaires par rapport à la surface du substrat (1), présentent des coupes permanentes avec une partie de la masse (2) jouant le rôle d'électrode,
- les entretoises (3) sont conçues de telle sorte que la masse (2) peut être déviée dans le plan de la surface du substrat,
- dans au moins une direction parallèle à cette surface et pour toute déviation de la masse (2), les dimensions des coupes avec une partie de la masse jouant le rôle d'électrode des projections, perpendiculaires à la surface du substrat (1), des deux électrodes d'au moins une paire, varient,
- l'épaisseur de la couche de la masse (2) correspond à l'épaisseur d'une couche de contact ou d'un contact en silicium qui sont prévus comme raccordement pour des composants électroniques intégrés sur ou dans le substrat (1) et
- les électrodes (41, 42, 43, 44) disposées à la surface du substrat sont formées par des zones dopées.

2. Capteur d'accélération selon la revendication 1 pour lequel
un transistor à effet de champ avec électrode de grille est intégré sur le substrat (1) et
cette électrode de grille est structurée à partir de la même couche que la masse (2).

3. Capteur d'accélération selon la revendication 1 ou 2 pour lequel
au moins une des paires d'électrodes (17, 18, 19) est disposée de telle sorte que les projections des électrodes (17, 18, 19) de ces paires, perpendiculairement à la surface du substrat, présentent des coupes permanentes ou qui ne disparaissent pas avec la partie de la masse (2) jouant le rôle d'électrode et que, pour n'importe quel déviation possible de la masse (2) parallèlement à cette surface, les dimensions de ces coupes restent constantes.

4. Capteur d'accélération selon l'une des revendications 1 à 3 pour lequel
la masse (2) comporte une découpe (5) en forme de fenêtre et
les projections des électrodes d'au moins une des paires d'électrodes (32, 42; 33, 43), perpendiculairement à la surface du substrat (1), présentent des coupes non négligeables avec cette découpe (5).

5. Capteur d'accélération selon l'une des revendications 1 à 4 pour lequel
les entretoises (3) ont leur dimension la plus faible dans la direction perpendiculaire à la surface du substrat (1).

6. Capteur d'accélération selon l'une des revendications 1 à 5 pour lequel
les électrodes sont reliées à un circuit électronique par l'intermédiaire duquel des tensions électriques variables peuvent être appliquées et ajustées entre la masse (2) et les électrodes d'une paire d'électrodes de telle sorte qu'une force d'inertie agissant sur la masse (2) dans la direction perpendiculaire à la surface du substrat (1) est compensée électrostatiquement par ces tensions.

7. Capteur d'accélération selon la revendication 6 pour lequel
ce circuit est conçu de telle sorte que, par son intermédiaire, entre la masse (2) et les électrodes (31, 41; 32, 42; 33, 43; 34, 44) d'une paire d'électrodes, qui est disposée de telle sorte que, pour toute position possible de la masse (2), les projections, perpendiculairement à la surface du substrat (1), des deux électrodes de cette paire présentent des coupes permanentes avec la partie de la masse (2) jouant le rôle d'électrode et que, dans au moins une direction parallèle à cette surface, les dimensions de ces coupes varient pour toute déviation de la masse (2), des tensions électriques peuvent être appliquées de telle sorte que, de cette façon, il est possible de détecter, à la suite d'une déviation de la masse (2) dans cette direction, une variation des capacités des condensateurs formés respectivement par les électrodes de cette paire avec la masse (2) et, à partir de là, la valeur de cette déviation.

8. Capteur d'accélération selon la revendication 6 pour lequel
ce circuit est conçu de telle sorte que, par son intermédiaire, entre la masse (2) et les électrodes (32, 42; 33, 43) de deux paires d'électrodes, qui sont disposées de telle sorte que, pour toute position possible de la masse (2), les projections, perpendiculairement à la surface du substrat, des deux électrodes de ces paires présentent des coupes permanentes ou qui ne disparaissent pas avec la partie de la masse (2) jouant le rôle d'électrode et que, dans au moins une direction parallèle à cette surface, les dimensions de ces coupes pour des électrodes appartenant à des paires différentes varient en sens contraire pour toute déviation de la masse (2), des tensions électriques peuvent être appliquées et ajustées de telle sorte qu'une force d'inertie agissant dans cette direction sur la masse (1) est compensée électrostatiquement par ces tensions et qu'une force d'inertie agissant dans la direction perpendiculaire à la surface du substrat (1) est également compensée électrostatiquement par ces tensions.
